# EUROPEAN PATENT APPLICATION

(11) **EP 4 015 378 A1**
(43) Date of publication of application: **22.06.2022**
(21) Application number: 21194342.8
(22) Date of filing: 01.09.2021
(51) Int. Cl.: B64C 39/02, G05D 1/02

(54) **PERSONAL PAPARAZZO DRONES**

(30) Priority: 18.12.2020 US 202017126302
(71) Applicant: Donovan, Laura Leigh, Scottsdale, AZ 85250 (US); Donovan, Bradford Andrew, Scottsdale, AZ 85250 (US)
(72) Inventor: Donovan, Laura Leigh, Scottsdale, 85250 (US); Donovan, Bradford Andrew, Scottsdale, 85250 (US)
(74) Representative: LKGlobal UK Ltd.

(57) **Abstract**

In today's social media age of live streaming and online celebrity, a solution is needed for a user to take pictures and/or video of themselves from flattering angles and under desired lighting without extending their arm, using a selfie stick or asking a stranger for help. The various embodiments of the invention herein disclose paparazzo systems (10) and methodologies for utilizing drones (12) to get the perfect image (whether it be live streaming, lifecasting, video, vlogging, teleconferencing, or still pictures). In one embodiment, a user (like a social media influencer 16) can activate a drone (12), which is detachably coupled to the portable drone home area (18, 19), to track and take images of the user (16) while providing instruction to the drone as to a desired angle or level of lighting all by voice command.

## Description

### CROSS-REFERENCE TO RELATED APPLICATION(S)

This application claims priority to U.S. provisional application No. 63/088,702 filed on October 7, 2020. The disclosure of the above application is incorporated herein by reference.

This application further claims priority to U.S. provisional application No. 63/079,610 filed on September 17, 2020. The disclosure of the above application is incorporated herein by reference.

### STATEMENT OF FEDERALLY SPONSORED RESEARCH OR DEVELOPMENT

Not applicable.

### FIELD OF THE INVENTION

The present invention is directed to an interactive drone solution for a user to take pictures and/or video of themselves from flattering angles and under desired lighting without extending their arm, using a selfie stick or asking a stranger for help.

### BACKGROUND OF THE INVENTION

The present invention is directed to an interactive drone solution for a user to take pictures and/or video of themselves from flattering angles and under desired lighting without extending their arm, using a selfie stick or asking a stranger for help.

In 2013, Oxford English Dictionary declared selfie to be their "word of the year." "Selfie: noun, informal. A photograph that one has taken of oneself, typically one taken with a smartphone or webcam and uploaded to a social media website," according to Oxford. "Also: selfy. Plural: selfies."

As of 2014, it was estimated that some one trillion selfies had been taken.

In recent years, while the selfie remains a mainstay of global culture, social media and online celebrity have moved to live streaming of video as a medium for public display, comment, social interaction and a source of narcissistic supply. Current social media platforms include, inter alia, Twitch ^{®}, YouTube Live ^{®}, Instagram ^{®}, OnlyFans ^{®}, Facebook and Facebook Live ^{®}, Periscope ^{®}, Douyu ^{®}, Kuaishou ^{®} and TikTok ^{®}. Importantly, many of these platforms allow for fan interaction.

Ergo, a solution is needed for a user to take pictures and/or video of themselves from flattering angles and under desired lighting without extending their arm, using a selfie stick or asking a stranger for help, or a solution to the ever-present Instagram ^{®} boyfriend. Small, lightweight drones offer a solution.

Currently, as illustrated, inter alia, in U.S. Patent Application 20190227572 and U.S. Patent 10,625,854, drone technology is developing rapidly and multiple references can be cited to for drone imaging, control, flight planning and tracking subjects with global positioning (GPS).

Of interest to the present invention are U.S. Patent Nos. 9,859,938 and 10,046,732 titled "Public safety smart belt" to Piccioni disclosing a smart belt used for safety and law enforcement ("Piccioni") and U.S. Patent Application 20170180623 titled "Selfie-Drone System and Performing Method Thereof' to Lin disclosing use of a done in a preprogrammed manner to take a selfie ("Lin").

Piccioni was issued two patents related to a safety belt that included means for storing, transporting and recharging various law enforcement equipment. With reference to Figure 7, Piccioni disclosed a drone as part of this law enforcement equipment.

The present invention is distinguished from Piccioni in purpose, structure and function. Primarily, the Piccioni disclosure is directed to a completely different purpose, namely, law enforcement and, thus, is nonanalogous art. One would not look to a law enforcement solution for technology related to social media influencing. Additionally, and importantly, the present invention is distinguished from Piccioni in multiple ways including, but not limited to, the structure and function of capturing an image (whether it be live streaming, lifecasting, video, vlogging, teleconferencing, or still pictures) based on user commands providing instruction to the drone as to a desired angle or level of lighting.

In 2017, Lin attempted to claim the use of existing drone technology with preprogrammed, input of parameters (template instruction from a database) to position a drone for a photo of a user.

Lin was abandoned after multiple rounds of examination as obvious under 35 U. S. C. 103 in view of U.S. Patent Applications 20170180623; 20160271796 and 20120307042.

The present invention is distinguished from Lin in multiple ways including, but not limited to, creating a paparazzo system that independently tracks a user and may change orientation relative to the user based on real-time commands. These user commands can be informed by the broadcasted images from the drone, the user preference and/or the ambient environment.

### SUMMARY OF THE INVENTION

It is an object of the present invention to provide a solution for a user to take pictures and/or video of themselves from flattering angles and under desired lighting without extending their arm, using a selfie stick or asking a stranger for help.

The various embodiments of the present invention disclose paparazzo systems and methodologies for utilizing drones to get the perfect image (whether it be live streaming, lifecasting, video, vlogging, teleconferencing, or still pictures). In one embodiment, a user (like a social media influencer) can activate a drone, which is detachably coupled to the portable drone home area, to track and take images of the user while providing instruction to the drone as to a desired angle or level of lighting all by voice command.

The paparazzo systems and methodologies of the present invention comprises (1) at least one drone in wireless communication to a personal computer configured to provide commands to the drone to create at least one image while tracking a user; and (2) at least one portable drone home area coupled to the user.

### BRIEF DESCRIPTION OF THE DRAWINGS

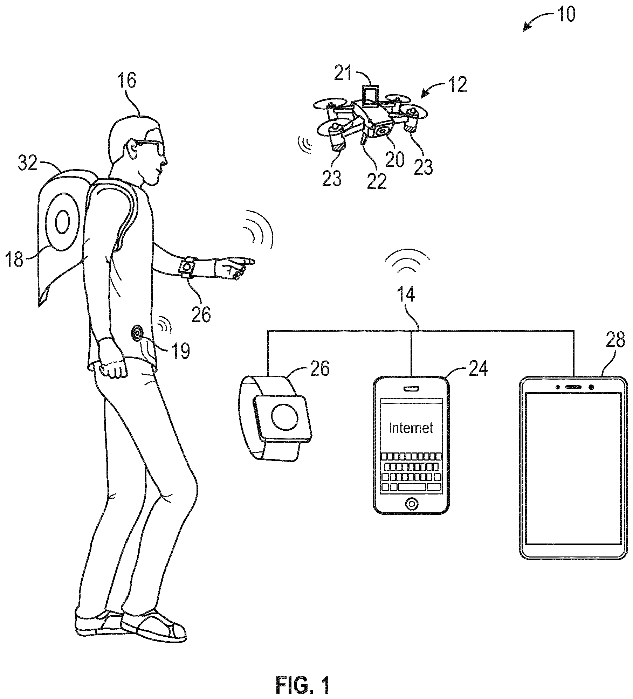

Figure 1 is a diagram of the basic components of the paparazzo system according to one embodiment of the present disclosure.

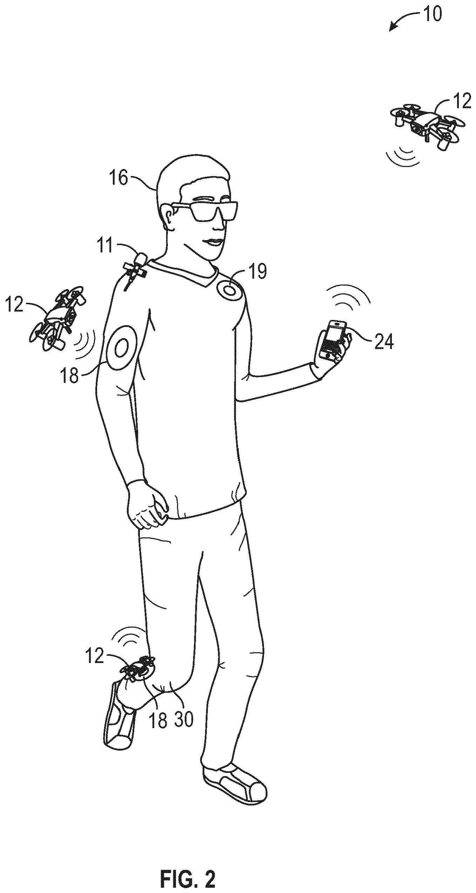

Figure 2 is an exemplary view of swarming drones tracking user and docking with wearable home area according to one embodiment of the present disclosure.

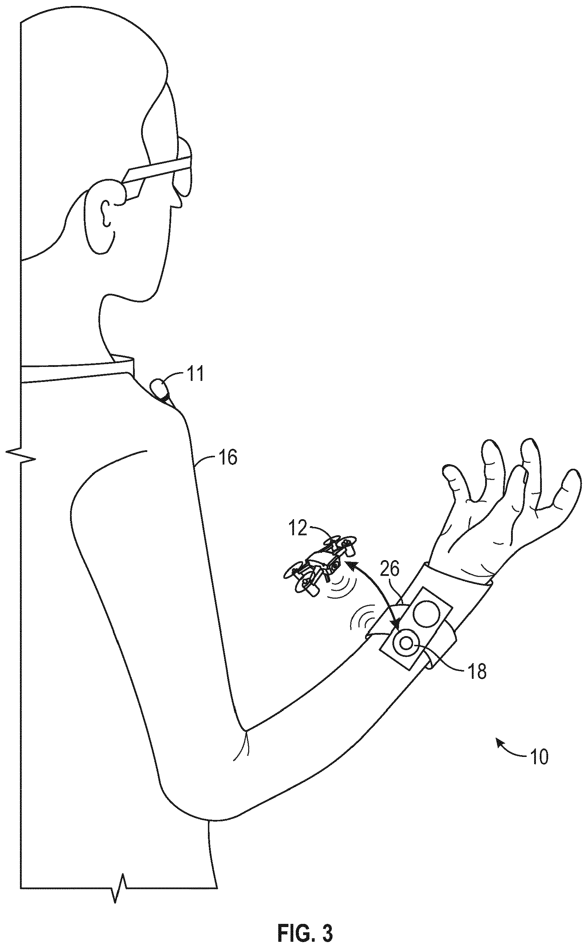

Figure 3 is an exemplary view of a drone docking with a wearable smartwatch according to one embodiment of the present disclosure.

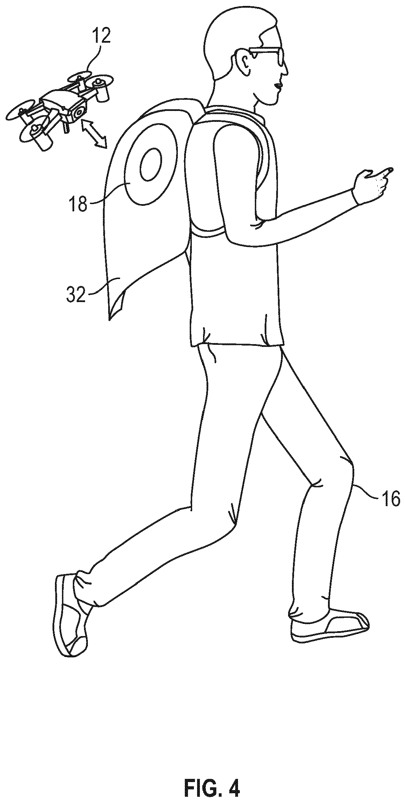

Figure 4 is an exemplary view of a drone docking with a wearable pack according to one embodiment of the present disclosure.

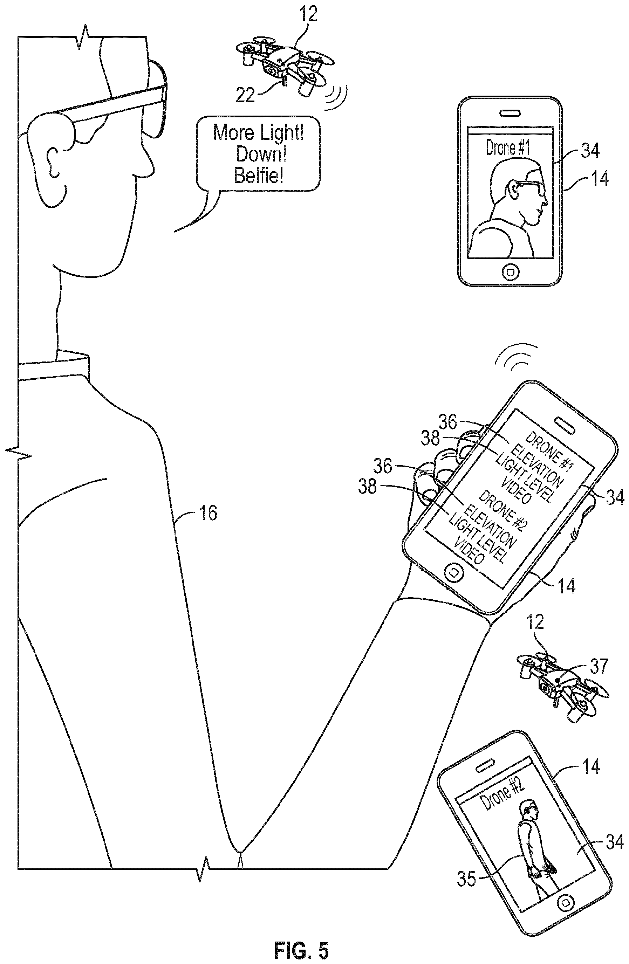

Figure 5 is an exemplary view of the paparazzo drone system allowing for voice commands to adjust imaging from one or more drones based according to one embodiment of the present disclosure.

### DETAILED DESCRIPTION

The present invention allows a user to take pictures and/or video of themselves from flattering angles and under desired lighting without extending their arm, using a selfie stick or asking a stranger for help.

This paparazzo system 10 of the present invention comprises at least one drone 12 in wireless communication to a personal computer 14 configured to provide commands to the drone 12 to create at least one image while tracking a user 16; and at least one portable drone home area 18 coupled to the user 16.

In accordance with various embodiments of the present invention, a drone 12 may comprise any commercially available drone or any drone configuration modified based on commercially available drone technologies including, but not limited to, any audiovisual, wireless communication, global positioning (GPS), power supply, memory, processing or programable components. In accordance with various embodiments of the present invention, it is preferential that the drone 12 be small and lightweight to allow the user 16 to carry comfortably on their person.

Further, in accordance with various embodiments of the present invention, it is preferential that the drone 12 is optimized to take stable images (whether it be live streaming, lifecasting, video, vlogging, teleconferencing, or still pictures) within thirty feet in light wind, and that it weigh less than 5-pounds. For reference, a light wind or "fresh breeze" as defined by the Beaufort wind scale may be less than about 24 mph, wherein small trees sway.

As disclosed, in accordance with various embodiments of the present invention, the drone 12 may comprise multiple cameras 20, screens 21, microphones 22 and/or speakers 23.

Further, in accordance with various embodiments of the present invention, the drone 12 comprises a location technology, like global positioning (GPS), capable of tracking the user 16 and/or the drone home area 18 to orient location, angle or lighting relative to the user 16 to provide one or more images (whether it be live streaming, lifecasting, video, vlogging, teleconferencing, or still pictures) perceived as perfect for a user 16 (like a social media influencer).

It is in accordance with various embodiments of the present invention, the paparazzo system 10 further comprises a tag, pin, sticker, or other signaling device 19 that provides a signal for orientation of one or more drones 12 relative to the body orientation of the user 16. This signaling device 19 may also be embedded within or incorporated into any wearable drone home area 18. Further, in accordance with various embodiments of the present invention, signaling device 19 may be affixed to (i.e. a sticker) to the user 16, clipped to the user 16, or embedded in the clothing of the user 16.

In accordance with various embodiments of the present invention, a personal computer 14 may comprise any commercially available or any configuration modified based on commercially available personal computer technologies including, but not limited to, any audiovisual, screen, wireless communication, global positioning (GPS), power supply, memory, processing or programable components.

In accordance with various embodiments of the present invention, it is preferential that the personal computer 14 be small and lightweight to allow the user 16 to carry comfortably on their person including, but not limited to, any smartphone 24, smartwatch 26 or tablet 28. Additionally, for the purposes of the present invention, all peripheral components are considered as disclosed within the personal computer 14, like a microphone or camera worn by the user 16.

In accordance with various embodiments of the present invention, a drone home area 18 may further comprise a recharging device any commercially available or any configuration modified based on commercially available wireless charging / wireless power transfer technologies including, but not limited to, any type of electromagnetic induction, inductive coupling or resonant inductive coupling technologies.

In accordance with various embodiments of the present invention, it is preferential that the drone home area 18 be small and lightweight to allow the user 16 to carry comfortably on their person. Further, in accordance with various embodiments of the present invention, it is preferential that the drone home area 18 be coupled directly or indirectly to the user 16.

In accordance with various embodiments of the present invention, it is preferential that the home area 18 comprises a wearable including, but not limited to, an article of clothing 30, smartphone 24, smartwatch 26 or tablet 28.

In accordance with various embodiments of the present invention, it is preferential that the drone home area 18 comprises a pack 32 including, but not limited to, a backpack, fanny pack or a hydration backpack (i.e. CamelBak^{®}).

In accordance with various embodiments of the present invention, one or more drones 12 is detachably coupled to the drone home area 18 such that it is portable and deployed without needing to be carried by the user 16. Further, in accordance with various embodiments of the present invention, each drone 12 may create at least one image while tracking and orienting location, angle or lighting relative to the user 16 and/or the drone home area 18. The intention to provide one or more images (whether it be live streaming, lifecasting, video, vlogging, teleconferencing, or still pictures) perceived as for a user 16 (like a social media influencer).

In accordance with various embodiments of the present invention, paparazzo system 10 comprises an application interface 34 configured to run on the personal computer 14 to allow the user 16 to configure a drone 12 to personal voice commands to instruct to the drone 12 as to a desired angle 36 or level of lighting 38.

Further, in accordance with various embodiments of the present invention, the application interface 34 comprises any commercially available or any configuration modified based on commercially available image processing technologies including, but not limited to, filtering, cropping or augmented reality allowing the user 16 to manage and curate imaging from the drone 12.

In accordance with various embodiments of the present invention, paparazzo system 10 allows the user 16 to manage and curate imaging broadcasted from the drone 12 and to provide iterative instructions to the drone 12 based on the broadcasted images (whether it be live streaming, lifecasting, video, vlogging, teleconferencing, or still pictures) perceived as flattering for a user 16 (like a social media influencer). This allows the user 16 to manipulate the distance, angle, lighting, aspect ratio, etc. the images both digitally in the application interface 34 and by providing feedback to the drone 12.

Further, in accordance with various embodiments of the present invention, these multiple instructions to the drone 12 may be by voice command to either the microphone 22 on the drone 12, the microphone on the personal computer 14, the microphone coupled to the user 16 (i.e. a lavalier microphone 11) or any combination thereof.

In accordance with various embodiments of the present invention, the images may be stored in memory on the drone 12, personal computer 14, or both.

Further, in accordance with various embodiments of the present invention, the paparazzo system 10 allows the user 16 to capture images including additional people, behind them, or the user's 16 backside (commonly referred to as a "belfie" 35) or in a manner not possible with selfie-stick or using their own reach.

Additionally, in accordance with various embodiments of the present invention, the paparazzo system 10 may further utilize a light or flash 37 on one or more drones 12 to create lighting effects (i.e. twinkling stars, flash-bulb effects, or colored streamers) relative to another drone 12, thereby allowing the user 16 to create an image or a video with lighting effects.

Further disclosed, in accordance with various embodiments of the present invention, and the paparazzo system 10 described herein, is a method to have your own paparazzo comprising (1) wirelessly pairing at least one drone 12 to a personal computer 14; (2) tracking a user 16 with the at least one drone 12; (3) providing commands to the at least one drone 12, vis-à-vis the personal computer 14, to create at least one image of the user; and (4) orienting the at least one drone 12 to a portable drone home area 18 coupled to the user 16.

The present invention is directed to a new and unobvious paparazzo system and should not be limited by the above described embodiment but should be limited solely by the claims that follow.

As used herein, unless otherwise limited or modified, lists with elements that are separated by conjunctive terms (e.g., "and") and that are also preceded by the phrase "one or more of" or "at least one of" indicate configurations or arrangements that potentially include individual elements of the list, or any combination thereof. For example, "at least one of A, B, and C" or "one or more of A, B, and C" indicates the possibilities of only A, only B, only C, or any combination of two or more of A, B, and C (e.g., A and B; B and C; A and C; or A, B, and C).

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. Explicitly referenced embodiments herein were chosen and described in order to best explain the principles of the disclosure and their practical application, and to enable others of ordinary skill in the art to understand the disclosure and recognize many alternatives, modifications, and variations on the described example(s). Accordingly, various embodiments and implementations other than those explicitly described are within the scope of the following claims.

## Claims

1. A paparazzo system comprising:
at least one drone, the at least one drone operable to track a user and to capture at least one image;
a personal computer in wireless communication with the at least one drone, the personal computer configured to provide commands to the at least one drone to capture the at least one image while the drone is tracking the user; and
at least one portable drone home area coupled to the user,
wherein the at least one drone is sufficiently small and lightweight to be coupled comfortably to the user.

2. The system of claim 1, wherein the personal computer is a smartphone or a tablet.

3. The system of claim 1 or 2, wherein the personal computer is a smartwatch, wherein, optionally, the smartwatch acts as both the personal computer and the portable drone home area.

4. The system of claim 1, 2 or 3, wherein the personal computer comprises at least one screen for display of a user interface image enabling a second user command to instruct the drone to a new desired angle, height or level of lighting relative to the user.

5. The system of any preceding claim, wherein the portable drone home area is a wearable, wherein, optionally, the wearable is one of a backpack or clothing.

6. The system of any preceding claim, wherein the portable drone home area comprises a recharging device.

7. The system of any preceding claim, wherein the commands to the drone instruct a desired angle relative to the user.

8. The system of any preceding claim, wherein the commands to the drone instruct a desired level of lighting relative to the user.

9. The system of any preceding claim, wherein the at least one image is streaming video.

10. The system of any preceding claim, wherein the at least one drone tracks the user by GPS.

11. The system of any preceding claim, further comprising at least one microphone, the at least one microphone disposed on one or more of (i) the at least one drone, (2) the computer, or (3) the user, wherein, optionally, the commands comprise voice commands.

12. A method for personal paparazzo comprising:
wirelessly pairing at least one drone to a personal computer;
tracking a user with at least one drone;
providing commands to the drone, vis-à-vis the personal computer, to capture at least one image of the user; and
recharging the at least one drone on a portable drone home area coupled to the user.

13. The method of claim 12, wherein the step of providing commands to the drone comprises instructing a desired angle relative to the user, and / or wherein the step of providing commands to the drone comprises instructing a desired level of lighting relative to the user.

14. The method of claim 12 or 13, wherein the provided commands comprise voice commands.

15. A paparazzo system comprising:
at least one drone optimized to capture images of a user within thirty feet of the the user and in light wind situations;
a personal computer in wireless communication with the at least one drone and configured to process voice commands to the drone that instruct the drone to: (i) a desired angle or level of lighting (ii) capture at least one image of the user while tracking the user;
at least one screen for display of a user interface image on the personal computer enabling a second user command to instruct the drone to a new desired angle, height or level of lighting; and
at least one wearable drone home area configured to detachably couple the drone to the user.
